# EUROPEAN PATENT APPLICATION

(11) **EP 1 978 053 A1**
(43) Date of publication of application: **08.10.2008**
(21) Application number: 07707530.7
(22) Date of filing: 26.01.2007
(51) Int. Cl.: C08G 75/14, G02F 1/15, H01M 10/40

(54) **PROCESS FOR THE PRODUCTION OF SULFUR-CONTAINING AROMATIC POLYMERS**

(30) Priority: 27.01.2006 JP 2006019209
(71) Applicant: Fuji Jukogyo Kabushiki Kaisha, Tokyo 160-0023 (JP); Shirouma Science Co., Ltd., Shimoniikawa-gun, Toyama 939-0643 (JP); MITSUI & CO., LTD., Tokyo 100-0004 (JP); Oyama, Noboru, Musashino-shi, Tokyo 180-0002 (JP)
(72) Inventor: OYAMA, Noboru, Tokyo 180-0002 (JP); SARUKAWA, Tomoo, (JP); TANIGUCHI, Masahiko, (JP); SHIMOMURA, Takeshi, (JP); YAMAGUCHI, Shuichiro, (JP)
(74) Representative: Jennings, Nigel Robin
(86) International application number: PCT/JP2007/051298
(87) International publication number: WO 2007/086519

(57) **Abstract**

A method of producing a polymer of a sulfur-containing aromatic compound includes reacting, under heating, a halide of a sulfur-containing aromatic compound having at least one aromatic ring and at least one ring containing one or more disulfide bonds wherein one side of the disulfide-containing ring constitutes one side of the aromatic ring, with inorganic sulfur in an amount equivalent to 2 to 8 S atoms relative to 1 mol of the halide of the sulfur-containing aromatic compound in the presence of at least one inorganic base selected from the group consisting of an alkali metal hydroxide, an alkali metal hydrogen carbonate and an alkali metal carbonate and/or at least one organic base selected from the group consisting of a tri(lower alkyl)amine and a heterocyclic amine in an organic solvent.

## Description

### Technical Field

The present invention relates to a method of producing a novel sulfur-containing aromatic polymer having both redox activity and chromic characteristics associated therewith. The obtained polymer is used in wide applications and may be applied to positive electrode materials of secondary batteries, electrochromic display materials and electron donating or accepting materials as organic semiconductors.

### Background Art

Organosulfur materials having a disulfide-containing aromatic ring have been known as compounds exhibiting redox activity so far. Koyama who is one of the inventors of the present invention has clarified that a certain type among these organosulfur materials has such a property that it can donate or accept electrons reversibly, and a patent application of this material has been filed (PCT Patent Application No. PCT/JP2005/005953 (International filing date: March 29, 2005) based on Japanese Patent Application No. 2004-101018). The material disclosed in the PCT Patent Application No. PCT/JP2005/005953, is a sulfur-containing aromatic compound which has at least one aromatic ring and at least one ring containing one or more disulfide bonds, wherein one side of the disulfide-containing ring includes one side of the aromatic ring.

However, the inventors of the present invention have found the problem that when a solution is used as the electrolyte for devices, electrodes prepared from these compounds (active materials) do not exhibit solubility only by soaking them in the electrolytic solution; however, the electrodes become soluble in the electrolytic solution when 2 to 3 cycles are repeated after potential sweep is started to induce a redox reaction, and the redox activity of the electrodes gradually decrease.

Next, in a reversible redox reaction of the sulfur-containing aromatic compound described in PCT Patent Application No. PCT/JP2005/005953, a one or two electron-transfer redox reaction by which disulfide-containing rings which are in a neutral state become charged +1 and/or +2 per ring is utilized for the charge-discharge action of the positive electrode material for a lithium secondary battery. In this case, along with the electron transfer reaction, phosphorous hexafluoride anions (PF₆⁻) or tetrafluoroboric acid anions (BF₄⁻) used as the electrolyte transfer to the inside of the electrode active material layer. For this reason, in devices such as batteries using the above material as the electrode, the electrolyte is required in an amount enough to induce the redox reaction smoothly, causing a reduction in the energy density of the whole device, which is the second problem that the inventors of the present invention have found.

### Disclosure of Invention

Accordingly, it is an object of the present invention to provide a method of producing a material having the characteristics that the repetitive stability of charge-discharge characteristics is maintained by making a sulfur-containing aromatic compound into a polymer to suppress the dissolution of the aromatic compound into an electrolyte when the sulfur-containing aromatic compound is used as a positive electrode material of a lithium secondary battery.

In the present invention, as a measure to prevent the dissolution of a sulfur-containing aromatic compound into an electrolyte which dissolution is hardly avoided in the case of a sulfur-containing aromatic compound monomer, the sulfur-containing aromatic compound is made into a polymer to lower the solubility, thereby accomplishing an increase in repetitive life as to the characteristics of its application. More specifically, it has been found effective to link the aromatic ring of the sulfur-containing aromatic compound through sulfur atoms as a method to form a polymer of the sulfur-containing aromatic compound. Also, it has been found that the linkage of sulfur atom enables the association or dissociation of electrons, that is, the supply and acceptance of electrons even at the linked part of the ring, whereby the number of the transferred electrons which can be associated or dissociated can be increased, with the result that it is possible to improve energy density per unit weight.

According to the present invention, there is provided a method of producing a polymer of a sulfur-containing aromatic compound, the method comprising reacting, under heating, a halide of a sulfur-containing aromatic compound having at least one aromatic ring and at least one ring containing one or more disulfide bonds wherein one side of the disulfide-containing ring constitutes one side of the aromatic ring, with inorganic sulfur having an amount equivalent to 2 to 8 S atoms relative to 1 mol of the halide of the sulfur-containing aromatic compound in the presence of at least one inorganic base selected from the group consisting of an alkali metal hydroxide, an alkali metal hydrogen carbonate and an alkali metal carbonate and/or at least one organic base selected from the group consisting of a tri-lower alkyl-amine and a heterocyclic amine in an organic solvent.

### Brief Description of Drawings

FIG. 1 is a graph showing the results of thermogravimetric analysis of TTN-4Cl and each of Products 1 to 4 obtained in Examples 1 to 3 and Comparative Example 1.
FIG. 2 is a cyclic voltammogram of Product 2 obtained in Example 2.

### Best Mode for Carrying Out the Invention

The sulfur-containing aromatic compound which is made into a polymer according to the present invention has at least one aromatic ring and at least one ring containing one or more disulfide bonds wherein one side of the disulfide-containing ring constitutes one side of the aromatic ring and has a property that it can reversibly donate and accept one or more electrons per ring. Such a sulfur-containing material includes an organosulfur compound having an aromatic moiety containing at least one aromatic ring and a sulfur-containing ring moiety having a disulfide-containing heterocyclic ring containing at least one disulfide bond, the heterocyclic ring having at least one side of the aromatic ring as its side. Here, the aromatic ring and the disulfide-containing heterocyclic ring have at least one side in common. Generally, the aromatic ring and the disulfide-containing heterocyclic ring share at least two carbon atoms as common atoms. The aromatic moiety includes a condensed polycyclic skeleton having at least one benzene ring or a nitrogen-containing heterocyclic ring. Examples of the condensed polycyclic skeleton include condensed polycyclic compounds, for example, polyacenes such as naphthalene, anthracene, tetracene and hexacene.

It is preferable from the foregoing PCT Patent Application No. PCT/JP2005/005953 that the sulfur-containing aromatic compound be an organic sulfur-containing material in which at the disulfide-containing ring, the ring is neither opened nor closed by the redox reaction of the sulfur moiety, but is charged +1 and/or +2 valences, and/or -1 valence per ring, and it is not preferable that the one disulfide-containing ring in a neutral state undergo a two electron-reduction, that is, the sulfur active moiety be not converted into a thiol group.

Examples of such a sulfur-containing aromatic compound include compounds represented by the following formulae (1) to (3).

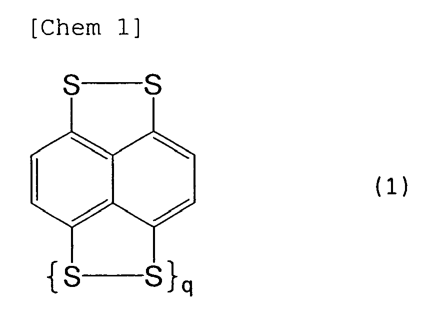

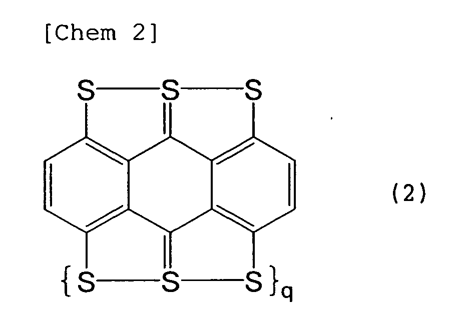

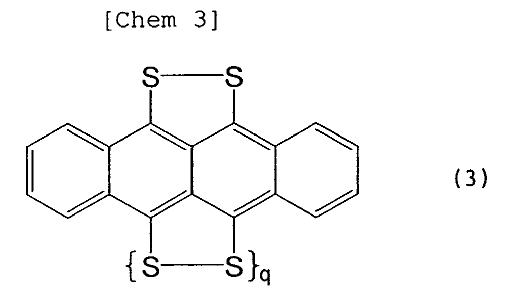

In the formulae (1) to (3), each q is 0 or 1.

In the present invention, a halide of the above sulfur-containing aromatic compound is used as a starting material to link the above sulfur-containing aromatic compounds through a sulfur atom in each aromatic ring thereby converting the compounds into a polymer. The halogen is substituted on the aromatic ring of the sulfur-containing aromatic compound. As the halogen, chlorine, bromine, iodine or the like is used, with chlorine being preferable. The halide of the sulfur-containing aromatic compound may have one to the highest possible number of substitutable halogen atoms.

According to the present invention, the halide of the above sulfur-containing aromatic compound is reacted under heating with inorganic sulfur in an organic solvent in the presence of a specified base.

As the organic solvent, an aprotic polar solvent such as N-methylpyrrolidone, N,N-dimethylacetamide, N,N-dimethylformamide or dimethyl sulfoxide is preferable.

The base is at least one inorganic base selected from the group consisting of alkali metal hydroxides, alkali metal hydrogen carbonates and alkali metal carbonates and/or at least one organic base selected from the group consisting of tri lower alkyl amines and heterocyclic amines. The alkali metal includes lithium, sodium, potassium and the like. Also, the tri lower alkyl amines may be represented by the formula: (R₁)(R₂)R₃N (where R₁, R₂ and R₃ each represent hydrogen or a lower alkyl group having 1 to 4 carbon atoms (for example, methyl, ethyl, n-propyl, isopropyl, n-butyl, isobutyl and t-butyl). The heterocyclic amines include pyridine and the like.

The inorganic sulfur used is preferably used in an amount equivalent to 2 to 8 S atoms relative to 1 mol of the halide of the sulfur-containing aromatic compound. If the sulfur-containing aromatic compound and the inorganic sulfur are used in the above proportion, the structure of a linking portion can be controlled.

If the amount of the inorganic sulfur is less than the amount equivalent to 2 S atoms relative to 1 mol of the sulfur-containing aromatic compound, the halide of the sulfur-containing aromatic compound undergoes a dehalogenation reaction insufficiently so that a desired compound is not obtained, which is not preferable. If the amount of the inorganic sulfur exceeds the amount equivalent to 8 S atoms relative to 1 mol of the sulfur-containing aromatic compound, no polymerization reaction is induced and therefore no desired compound is obtained, which is not preferable.

The above inorganic sulfur to be used is preferably a sulfur powder having an oxidation number of 0.

The reaction is preferably carried out at a temperature of 100 to 200°C. This reaction temperature is a temperature optimum to dissolve the sulfur-containing aromatic compound and inorganic sulfur, which serve as reaction solutes when the polymer to be obtained in the present invention is synthesized, in an organic solvent. The reaction temperature of less than 100°C is not preferable because the above solutes are not dissolved. Also, the reaction temperature exceeding 200°C is not preferable because the organic solvent is vaporized.

The polymer of the sulfur-containing aromatic compound obtained in this manner is one in which the aromatic rings are linked through sulfur atoms. Such a polymer may be represented by the following formulae (4) to (6).

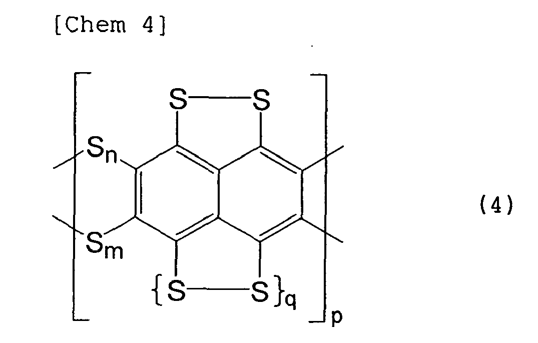

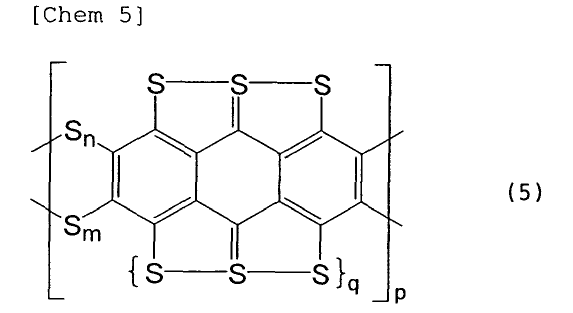

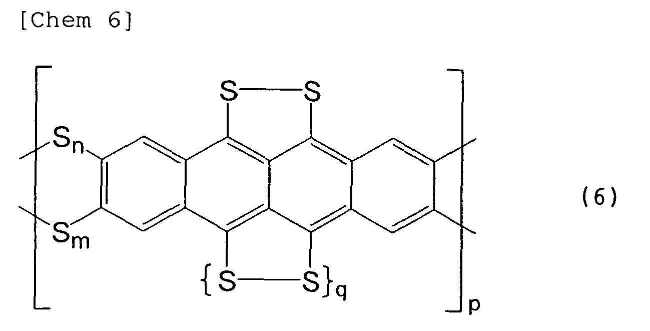

In the formulae (4) to (6), q is as defined above, p denotes 1 to 20, m denotes 1 to 3 and n denotes 0 to 3.

Unreacted raw materials and reaction byproducts can be removed by washing with an appropriate organic solvent (for example, the organic solvent used in the reaction) after the reaction is finished.

The number of linked sulfurs at the linking portion or terminal portion can be controlled by heating the resulting polymer at 250 to 420°C in an inert gas such as argon.

The polymer of the sulfur-containing aromatic compound obtained according to the present invention is redox-active, and an electrode manufactured using this (as an active material) exhibits an oxidation-reduction wave corresponding to the reversible redox response of the sulfur-containing compound.

When the polymer of the sulfur-containing aromatic compound obtained according to the present invention is used as the positive electrode material of a lithium secondary battery, carbon-based electron conductive particles are preferably added and an appropriate amount of a binder (for example, polyvinylidene fluoride) is added to and mixed with a solid powder of the polymer of the sulfur-containing aromatic compound obtained according to the present invention. The mixture may be applied to the surface of a current collector substrate and molded under pressure to manufacture a thin film (redox active thin film). The electrode manufactured in this manner makes it possible to take out therefrom a large current of, for example, 0.1 to 3 mA/cm² meeting the practical use need even at ambient temperature from the initial stage of a charge-discharge operation. As the carbon-based electron conductive particles (conductive carbon particles), carbon black, Ketjenblack, acetylene black, graphite, carbon nano-tube and the like may be exemplified. The conductive carbon particles may be used in proportion of 1 to 30 parts by weight relative to 100 parts by weight of the polymer of the sulfur-containing aromatic compound obtained according to the present invention.

When the redox active film manufactured according to the above method is installed in an electrolyte partitioned by a separator, and a charge-discharge test is carried out, the film is not eluted into the electrolyte but exhibits high redox activity. Also, the repetitive reproducibility of the redox activity is good.

However, in the redox reaction response of the thin film electrode manufactured using the polymer obtained according to the present invention at a voltage between 2.5 to 4.3V (vs. a lithium metal), the reaction active site is varied between a cation and neutrality and therefore anions existing in the electrolyte travel primarily in the thin film along with the reaction. Therefore, when it is intended to use an electrode manufactured using the polymer obtained according to the present invention in batteries, electrochromic display devices or the like, it is preferable to change the electrode material to a cation transfer type such as lithium ion from an anion transfer type material. As a method for achieving this, the following three methods to synthesize charge transfer complexes may be used which have long been used in the studies of organic semiconductors, organic metals and organic superconductors.
(1) a method in which the polymer (donor (D) material) obtained according to the present invention is directly reacted with an acceptor (A) material in a vapor phase, a solid phase or a liquid phase using an appropriate solvent; (2) a method in which an ionic charge transfer complex or an ion radical salt is obtained by utilizing the redox reaction of two materials to be mixed; and (3) a method in which D is electrolytically oxidized in a solution containing a support electrolyte CX to obtain ionic complexes DX, D₂X, D₃X₂ and the like. Here, because in the methods (1) and (2), the material which is to be the counter ion of D accepts and donates electrons in combination with D, it carries a redox reaction only with D and it is therefore difficult to convert it into a material transferring a cation such as a lithium ion. It is therefore necessary that the anion (X) selected as the counter ion of D be redox-inactive or inert in the potential range where it works as an electrode. Also, it is desirable that X be small in molecular weight and be polyvalently charged and that an ionic salt with D have high electronic conductivity in consideration of an improvement in the energy density of the entire electrode material. For the above reasons, as the counter ion of D, a sulfur divalent anion, tricyanuric acid anion, sulfuric acid ion and the like which are anions of sulfur-based materials may be selected as desirable ions. Also, when synthesizing an ionic salt with D, a method may be used in which an electrode coated with D is dissolved or soaked in an organic solvent electrolyte containing tens of millimoles/L of the above anion, to carry out electrolysis or D is suspended in an electrolytic solution to carry out electrolytic oxidation, thereby extracting the precipitates insolubilized by a neutralization reaction of charges between cation radicals of D dissolved in the electrolytic solution and X. The salt of D and a sulfuric acid ion may be obtained as a precipitate by reacting D with concentrated sulfuric acid, followed by dilution with water.

Carbon-based electron conductive particles may be added and also an appropriate amount of a binder may be added to the ionic salt of D obtained by the above method to make an electrode material. The electrode produced using this electrode material exhibits redox active response in the same manner as above and also, it can be confirmed that it is changed to a cationic type from the analysis of quarts oscillator electrode measuring method (reference: H. Daifuku et. al., Synthetic Metals, 41-43, 2897-2900 [1991]).

Moreover, the redox-active film according to the present invention may contain a metal oxide and a metal complex. Such a metal oxide includes layered metal oxides that can fix the sulfur-containing material between the layers, such as vanadium pentoxide. Also, the metal oxide includes redox active compounds such as lithium cobaltate (LiCoO₂), lithium nickelate (LiNiO₂) and lithium manganate (LiMn₂O₄). Moreover, the metal complex includes iron phosphate compounds (LiFePO₄-lithium olivinate). The energy storing ability of both the metal oxide and organosulfur compound may be utilized.

Furthermore, the redox-active film according to the present invention may contain metal-baesd electroconductive fine particles such as copper, iron, silver, nickel, palladium, gold, platinum, indium or tungsten and electroconductive metal oxides such as indium oxide or tin oxide. These electroconductive fine particles are preferably formed of silver, palladium, nickel, gold or copper and a mixture of dissimilar electroconductive fine particles may also be used.

The substrate (current collector) used to support the redox active film according to the present invention is an electroconductive substrate exhibiting electroconductivity at least at the surface which is in contact with the redox active film. Though this substrate may be formed of an electroconductive material such as a metal, conductive metal oxide and carbon, it is preferably formed of copper, carbon, gold, aluminum or alloys thereof. The substrate may be those obtained by coating a substrate body formed of other materials with the above electroconductive materials. Also, the substrate may have irregularities or may have a network form.

In the present invention, the redox active film particularly preferably has a thickness of 10 to 100 µm.

Also, the particles used in the present invention (including the polymer obtained according to the present invention, metal oxides, metal complexes and electroconductive microparticles) preferably have a size smaller than the thickness of the redox-active film.

When the redox-active material according to the present invention is used as an electrode for electrochemical devices, the dissolution of the redox active material of the present invention into an electrolyte can be suppressed if the electrolyte used in the device can be changed from an organic solvent type electrolyte to a complete solid electrolyte. There is particularly a solid electrolyte of sulfide type lithium ion electroconductive material among all solid electrolytes that have recently been attracting attentions, developed and studied. Particularly, Tatsumisago et al., (reference: M. Tatsumisago et. al., Solid State Ionics, 175, 13 [2004]) have reported an electroconductivity of 10⁻³ S-cm⁻¹ at ambient temperature by using Li₂S-P₂S₅ type glass and a ceramic sample synthesized by crystallizing the glass by a mechanochemical method. The sulfur-containing polyacene-based redox-active material according to the present invention may be made into an ionic salt by combination with an anion of a sulfur-based material and can also be ionized in common with a sulfur ion of the above solid electrolyte. Therefore, because the electrolyte and the electrode can be united at the interface between the both by common ionization, lithium ions can be smoothly transferred between the electrolyte and the electrode made from the material of the present invention. Therefore, it is possible to constitute an all solid lithium secondary battery using the material of the present invention as its positive electrode by combining with the above electrolyte.

Examples of the present invention will be explained hereinbelow. However, the present invention is not limited to these examples.

### Examples 1 to 3

0.71g of potassium carbonate was added in a 200 mL egg-shaped flask with a stirrer placed therein, and 1.0g of 3,4,7,8-tetrachloronaphtho[1,8-cd:4,5-c'd']bis[1,2-dithiol] (hereinafter referred to as TTN-4Cl) and inorganic sulfur were added sequentially. The inorganic sulfur added was used in an amount equivalent to 2 S atoms (Example 1), 4 S atoms (Example 2) and 8 S atoms (Example 3) relative to 1 mol of TTN-4Cl. Finally, after 100 mL of N,N-dimethylformamide was added as a solvent, a reflux condenser was set to the flask and the mixture was heated to raise the temperature. After the mixture was refluxed continuously at 153°C for 24 hours, the reaction was terminated, and the reaction mixture was cooled and filtered. The crystals obtained by the filtration were washed with water and N,N-dimethylformamide sequentially.

After drying, liver-brown to black crystals (Products 1 to 3) were obtained. The conditions of the experiments, yields and powder colors are shown in Table 1.

**Table 1:**

| Examples | TTN-4Cl/Base/ Inorganic Sulfur (g) | TTN-4Cl/Base/S (Molar Ratio) | Yield (g) | Color of Product | Product Number |
|---|---|---|---|---|---|
| Ex. 1 | 1.0/0.71/0.16 | 1/2/2 | 0.5 | Brown | 1 |
| Ex. 2 | 1.0/0.71/0.32 | 1/2/4 | 0.7 | Black | 2 |
| Ex. 3 | 1.0/0.71/0.64 | 1/2/8 | 1.0 | Black | 3 |

### Comparative Example 1

Black crystals (Product 4) were obtained in the same manner as in Examples 1 to 3 except that the sulfur was used in an amount equivalent to 10 S atoms relative to 1 mol of TTN-4Cl. The conditions of the experiments, yields and powder colors are shown in Table 2.

**Table 2:**

| Comp. Ex. | TTN-4Cl/Base/ Inorganic Sulfur (g) | TTN-4Cl/Base/S (Molar Ratio) | Yield (g) | Color of Product | Product Number |
|---|---|---|---|---|---|
| Comp. Ex. 1 | 1.0/0.71/0.80 | 1/2/10 | 1.1 | Black | 4 |

TTN-4Cl and Products 1 to 4 were subjected to elemental analysis as to C, H, N, S and Cl. The content of each element, the element ratios of S and Cl calculated when the number of carbon (C) atoms is set at 10 which is the number of carbon atoms of the naphthalene skeleton as a basic unit, and the dechlorination rate are shown in Table 3. Here, the dechlorination rate was defined as the ratio of the content of chlorine in the product to the content of chlorine in NTT-4Cl (the same applies below).

**Table 3:**

| Compound | Content of Elements (%) | | | | | Number of elements when the number of carbon atoms is set at 10 | | | Dechlorination Rate (%) |
|---|---|---|---|---|---|---|---|---|---|
| | C | H | N | S | Cl | C | S | Cl | |
| TTN-4Cl | 30.8 | 0 | 0 | 33.7 | 36.3 | 10 | 4.1 | 4.0 | - |
| Product 1 | 35.3 | 0 | 0 | 43.9 | 18.3 | 10 | 4.7 | 1.8 | 56.0 |
| Product 2 | 32.8 | 0 | 0 | 60.6 | 6.0 | 10 | 6. 9 | 0.6 | 84.5 |
| Product 3 | 30.5 | 0 | 0 | 65.1 | 3.9 | 10 | 8.0 | 0.4 | 89.2 |
| Product 4 | 23.9 | 0 | 0 | 73.8 | 2.0 | 10 | 11.6 | 0.3 | 92.9 |

It is found from Table 3 that with an increase in the ratio of sulfur relative to TTN-4Cl, the dechlorination rate is increased, but the content of a sulfur element is increrased at the same time.

Also, TTN-4Cl and Products 1 to 4 were subjected to the measurement of infrared spectroscopic spectrum. The infrared spectroscopic spectra of Products 1 to 4 were different from that of TTN-4CL and had relatively strong absorption at wavelengths of 570, 645, 750, 1070, 1150 and 1400 cm⁻¹. Also, the order of the intensities of the absorption peaks at 570 and 1070 cm⁻¹ were as follows: Product

### 1<Product 2<Product 3<Product 4.

The stretching vibration ascribed to a C-S bond is known to appear in a wavelength region from 700 to 600 cm⁻¹ and therefore, the absorptions that newly appear suggest the existence of a thioether bond.

Also, because the stretching vibration ascribed to an S-S bond is known to appear in a wavelength region around 500 cm⁻¹ and therefore, the absorption peak at a wavelength of 570 cm⁻¹ is considered to be due to a disulfide bond. The peak intensity at 570 cm⁻¹ increases with an increase in the ratio of sulfur relative to TTN-4Cl serving as the raw material, suggesting that molecules are bonded with each other through a disulfide bond in the presence of a large amount of sulfur.

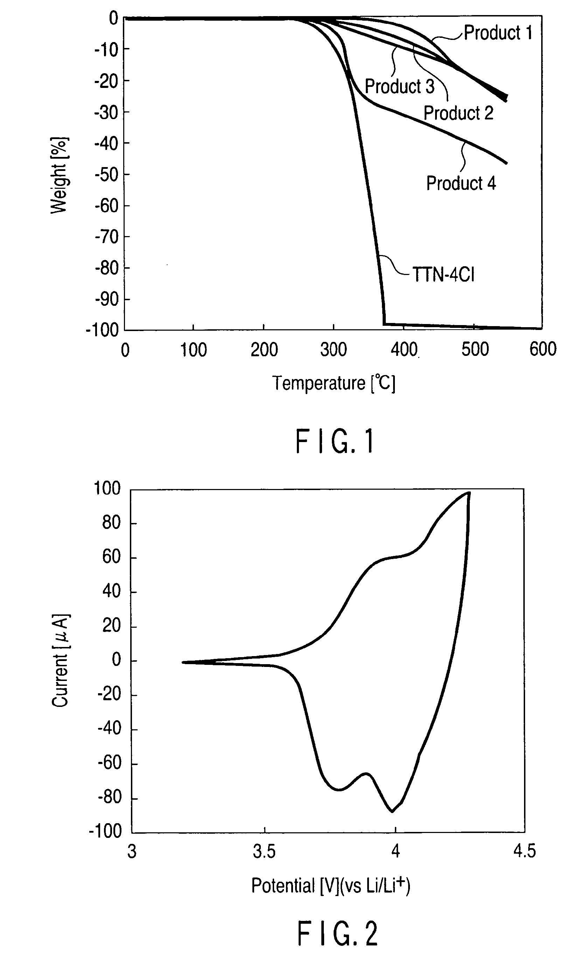

Moreover, TTN-4Cl and each product were subjected to thermogravimetric analysis, and the results are shown in FIG. 1. In the case of TTN-4Cl, a sharp reduction in weight was observed from a temperature around 300°C, whereas in the case of Products 1, 2 and 3, a sharp reduction in weight was not observed from a temperature around 300°C. It is inferred from these results that as to Products 1, 2 and 3, oligomers or polymers are produced in which a polymerization reaction progressed. Also, in the case of Product 4, it exhibited such a behavior that a sharp reduction in weight from a temperature around to 300°C as in the case of TTN-4Cl and then, at a temperature of 350°C or more, the same change in weight as in the case of Products 1, 2 and 3 was observed.

It is reported according to the article of Sato et al. (R. Sato et. al., Tetrahedron Letters, 30, pp 3453-3456 [1989]), that when a halogen element such as bromine is substituted with sulfur in tetrahalogenated benzene derivatives, polysulfide rings having an aromatic ring in common are formed. It is considered from this fact that in the case of Product 4, polymerization reaction is not induced and a polysulfide ring is formed, as seen from the result of the elemental analysis. However, since a polysulfide ring forming a five-membered ring or a seven-membered ring is chemically unstable (T. Kimura et al., Tetrahedron Letters, 41, pp 1801-1805 [2000]), it its inferred that in the case of Procudt 4, a desulfurization reaction proceeds at 300 to 350°C as shown in FIG. 1, but a crosslinking reaction occurs among the molecules and an oligomerization and polymerization progress, so that a tendency in the weight reduction at 350°C or more was almost the same as that in the behavior of Products 1 and 2.

It was confirmed from the results of the above elemental analysis, infrared spectroscopic spectrum and thermogravimetric analysis that compounds having the structures represented by the formula (4) were obtained in Examples 1, 2 and 3.

It is understood from this that a desired compound can be obtained by using inorganic sulfur in an amount equivalent to 2 to 8 S atoms relative to 1 mol of TTN-4Cl.

In order to investigate the redox response characteristics of the electrodes coated with Products 1 to 4 respectively, 100 mg of each product was dispersed in an appropriate amount of NMP, and 30 mg of carbon black which was an electroconductive carbon powder and 20 mg of a binder polymer were added thereto to form a paste, which was then applied to the surface of a glassy carbon electrode, followed by drying to manufacture a working electrode.

As the counter electrode and reference electrode, lithium metal electrodes were used. The CV measurement of each electrode was conducted at a sweep rate of 1 mV/sec in a potential range of +3.2 to +4.3V (vs. the lithium metal electrode). As an electrolytic solution used in the CV measurement, a mixed liquid of ethylene carbonate (EC) and diethyl carbonate (DEC) (weight ratio: 1 : 3) was used and, as an electrolytic salt, lithium tetrafluoroborate was used to prepare an electrolytic solution having a concentration of 1.0 M.

In Products 1 to 3, the redox response was observed at a range of 3.6 to 4.2V and repetitive response characteristics were good, supporting that these products are polymers. Also, in Product 4, the redox response was observed at a range of 3.6 to 4.2V. However, its current response was reduced every repetition of the cycle and the elution of the product from the surface of the electrode was confirmed. This fact suggested that in Product 4, the formation of a polymer did not progress. Also, among these redox responses, the current response of Product 2 was the largest and also the best repetitive response characteristics were obtained in the case of Product 2.

FIG. 2 shows the CV behavior of Product 2. A redox response was observed at a range of 3.6 to 4.2V and the repetitive stability was much better than that of TTN-4Cl. Also, the electrode weight energy density per active material, which was calculated based on the weight of the electrode (75 µg including 50 µg of the active material) coated on the glassy carbon, was about 200 mAh/g (second cycle). When the unit of Product 2 was C₁₀S_{6.9} (unit molecular weight = 341), the energy density of two-electron reaction per unit was 157 mAh/g or more and the energy density of three-electron reaction was 236 mAh/g or more. It is therefore considered from this result that not only the disulfide-containing ring but also the linking portion reversibly accepts and donates electrons in a redox response.

## Claims

1. A method of producing a polymer of a sulfur-containing aromatic compound, comprising reacting, under heating, a halide of a sulfur-containing aromatic compound having at least one aromatic ring and at least one ring containing one or more disulfide bonds wherein one side of the disulfide-containing ring constitutes one side of the aromatic ring, with inorganic sulfur in an amount equivalent to 2 to 8 S atoms relative to 1 mol of the halide of the sulfur-containing aromatic compound in the presence of at least one inorganic base selected from the group consisting of an alkali metal hydroxide, an alkali metal hydrogen carbonate and an alkali metal carbonate and/or at least one organic base selected from the group consisting of a tri(lower alkyl)amine and a heterocyclic amine in an organic solvent.

2. The method according to claim 1, wherein the reaction under heating is carried out at a temperature of 100-200°C.

3. The method according to claim 1, wherein the organic solvent is an aprotic solvent.

4. The method according to claim 1, wherein the sulfur-containing aromatic compound is a compound represented by Formula (1): 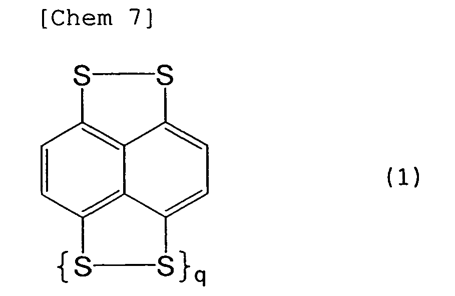 where q is 0 or 1.

5. The method according to claim 1, wherein the sulfur-containing aromatic compound is a compound represented by Formula (2): 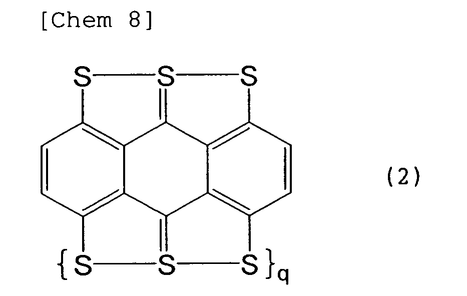 where q is 0 or 1.

6. The method according to claim 1, wherein the sulfur-containing aromatic compound is a compound represented by Formula (3): 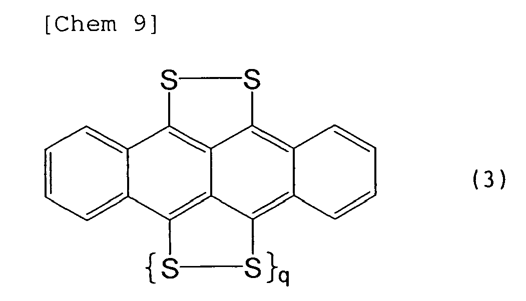 where q is 0 or 1.
